# EUROPEAN PATENT APPLICATION

(11) **EP 4 852 389 A1**
(43) Date of publication of application: **09.12.2026**
(21) Application number: 25747867.7
(22) Date of filing: 24.01.2025
(51) Int. Cl.: H04L 41/16

(54) **AI MODEL-BASED OPERATION RECOMMENDATION METHOD AND APPARATUS, AND RELATED DEVICE**

(30) Priority: 31.01.2024 CN 202410136909
(71) Applicant: Vivo Mobile Communication Co., Ltd., Dongguan, Guangdong 523863 (CN)
(72) Inventor: CHONG, Weiwei, Dongguan, Guangdong 523863 (CN)
(74) Representative: Conti, Marco
(86) International application number: PCT/CN2025/074848
(87) International publication number: WO 2025/162299

(57) **Abstract**

This application discloses an AI model-based operation recommendation method and apparatus, and a related device, pertaining to the field of communication technologies. The AI model-based operation recommendation method according to embodiments of this application includes: obtaining, by a first device based on an AI model and service objective information of a target service, first recommendation information corresponding to the service objective information, where the service objective information is used to indicate a service objective expected to be achieved, and the first recommendation information is used to determine an operation associated with the target service; and sending, by the first device, first information to a target object or a second device, where the first information includes the first recommendation information, and the target object is a device or a function for performing the operation.

## Description

### CROSS-REFERENCE TO RELATED APPLICATIONS

This application claims priority to Chinese Patent Application No. 202410136909.3, filed in China on January 31, 2024, which is incorporated herein by reference in its entirety.

### TECHNICAL FIELD

This application pertains to the field of communication technologies, and specifically, relates to an artificial intelligence (Artificial Intelligence, AI) model-based operation recommendation method and apparatus, and a related device.

### BACKGROUND

With the development of communication systems, in communication systems, the network data analytics function (Network Data Analytics Function, NWDAF) usually predicts service experience values corresponding to specific network environment configurations and sends them to consumer (Consumer) devices. The consumer devices determine corresponding operation actions based on the service experience values. However, due to a low intelligence level of the consumer devices, the determined operation actions cannot adapt to complex network environments, resulting in relatively poor network performance.

### SUMMARY

Embodiments of this application provide an AI model-based operation recommendation method and apparatus, and a related device, which can resolve the problem of relatively poor network performance.

According to a first aspect, an AI model-based operation recommendation method is provided, including:
obtaining, by a first device based on an AI model and service objective information of a target service, first recommendation information corresponding to the service objective information, where the service objective information is used to indicate a service objective expected to be achieved, and the first recommendation information is used to determine an operation associated with the target service; and
sending, by the first device, first information to a target object or a second device, where the first information includes the first recommendation information, and the target object is a device or a function for performing the operation.

According to a second aspect, an AI model-based operation recommendation method is provided, including:
receiving, by a target object, first information from a first device or second information from a second device; where
the first information includes first recommendation information, the first recommendation information is determined based on an AI model and service objective information of a target service, the service objective information is used to indicate a service objective expected to be achieved, and the first recommendation information is used to determine an operation associated with the target service; and
the second information includes second recommendation information, the second recommendation information is determined based on the first recommendation information, and the target object is a device or a function for performing the operation.

According to a third aspect, an AI model-based operation recommendation method is provided, including:
receiving, by a second device, first information from a first device; where
the first information includes first recommendation information, the first recommendation information is determined based on an AI model and service objective information of a target service, the service objective information is used to indicate a service objective expected to be achieved, and the first recommendation information is used to determine an operation associated with the target service.

According to a fourth aspect, an AI model-based operation recommendation apparatus is provided, including:
an obtaining module, configured to: based on an AI model and service objective information of a target service, obtain first recommendation information corresponding to the service objective information, where the service objective information is used to indicate a service objective expected to be achieved, and the first recommendation information is used to determine an operation associated with the target service; and
a first sending module, configured to send first information to a target object or a second device, where the first information includes the first recommendation information, and the target object is a device or a function for performing the operation.

According to a fifth aspect, an AI model-based operation recommendation apparatus is provided, including:
a second receiving module, configured to receive first information from a first device or second information from a second device; where
the first information includes first recommendation information, the first recommendation information is determined based on an AI model and service objective information of a target service, the service objective information is used to indicate a service objective expected to be achieved, and the first recommendation information is used to determine an operation associated with the target service; and
the second information includes second recommendation information, and the second recommendation information is determined based on the first recommendation information.

According to a sixth aspect, an AI model-based operation recommendation apparatus is provided, including:
a third receiving module, configured to receive first information from a first device; where
the first information includes first recommendation information, the first recommendation information is determined based on an AI model and service objective information of a target service, the service objective information is used to indicate a service objective expected to be achieved, and the first recommendation information is used to determine an operation associated with the target service.

According to a fifth aspect, a terminal is provided, where the terminal includes a processor and a memory, where a program or instructions capable of running on the processor are stored in the memory; when the program or the instructions are executed by the processor, the steps of the method according to the second aspect are implemented.

According to a sixth aspect, a terminal is provided, including a processor and a communication interface, where the communication interface is configured to receive first information from a first device or second information from a second device; where
the first information includes first recommendation information, the first recommendation information is determined based on an AI model and service objective information of a target service, the service objective information is used to indicate a service objective expected to be achieved, and the first recommendation information is used to determine an operation associated with the target service; and
the second information includes second recommendation information, and the second recommendation information is determined based on the first recommendation information.

According to a seventh aspect, a network-side device is provided, where the network-side device includes a processor and a memory, where a program or instructions capable of running on the processor are stored in the memory; and when the program or instructions are executed by the processor, the steps of the method according to the first aspect are implemented, or the method according to the second aspect is implemented, or the method according to the third aspect is implemented.

According to an eighth aspect, a network-side device is provided, including a processor and a communication interface, where
in a case that the network-side device is a first device, the processor is configured to: based on an AI model and service objective information of a target service, obtain first recommendation information corresponding to the service objective information, where the service objective information is used to indicate a service objective expected to be achieved, and the first recommendation information is used to determine an operation associated with the target service; and the communication interface is configured to send first information to a target object or a second device, where the first information includes the first recommendation information, and the target object is a device or a function for performing the operation;
in a case that the network-side device is a target object, the communication interface is configured to receive first information from a first device or second information from a second device; where the first information includes first recommendation information, the first recommendation information is determined based on an AI model and service objective information of a target service, the service objective information is used to indicate a service objective expected to be achieved, and the first recommendation information is used to determine an operation associated with the target service; where the second information includes second recommendation information, and the second recommendation information is determined based on the first recommendation information; and
in a case that the network-side device is a second device, the communication interface is configured to receive first information from a first device; where the first information includes first recommendation information, the first recommendation information is determined based on an AI model and service objective information of a target service, the service objective information is used to indicate a service objective expected to be achieved, and the first recommendation information is used to determine an operation associated with the target service.

According to a ninth aspect, a readable storage medium is provided, where the readable storage medium stores a program or instructions, and when the program or instructions are executed by the processor, the steps of the method according to the first aspect are implemented, or the steps of the method according to the second aspect are implemented, or the method according to the third aspect is implemented.

According to a tenth aspect, a wireless communication system is provided, including a first device, a second device, and a target object, where the first device can be configured to perform the steps of the method according to the first aspect, the second device can be configured to perform the steps of the method according to the third aspect, and the target object can be configured to perform the steps of the method according to the second aspect.

According to an eleventh aspect, a chip is provided, where the chip includes a processor and a communication interface, the communication interface is coupled to the processor, and the processor is configured to run a program or instructions to implement the method according to the first aspect, or the method according to the second aspect, or the method according to the third aspect.

According to a twelfth aspect, a computer program/program product is provided, where the computer program/program product includes computer instructions, and the computer program/program product is executed by at least one processor to implement the method according to the first aspect, or the method according to the second aspect, or the method according to the third aspect.

In embodiments of this application, the first device obtains, based on an AI model and service objective information of a target service, first recommendation information corresponding to the service objective information, where the service objective information is used to indicate a service objective expected to be achieved, and the first recommendation information is used to determine an operation associated with the target service; and the first device sends first information to a target object or a second device, where the first information includes the first recommendation information, and the target object is a device or a function for performing the operation. In this way, the first recommendation information is obtained based on the AI model, so that recommendation information suitable for the current network environment and satisfying the service objective information can be obtained by comprehensively considering multiple factors. Therefore, in the embodiments of this application, network performance can be improved, thereby enhancing reliability of execution of the target service.

### BRIEF DESCRIPTION OF DRAWINGS

FIG. 1 is a block diagram of a wireless communication system to which embodiments of this application are applicable;
FIG. 2 is a first schematic flowchart of an AI model-based operation recommendation method according to an embodiment of this application;
FIG. 3 is a second schematic flowchart of an AI model-based operation recommendation method according to an embodiment of this application;
FIG. 4 is a third schematic flowchart of an AI model-based operation recommendation method according to an embodiment of this application;
FIG. 5 is a fourth schematic flowchart of an AI model-based operation recommendation method according to an embodiment of this application;
FIG. 6 is a fifth schematic flowchart of an AI model-based operation recommendation method according to an embodiment of this application;
FIG. 7 is a first schematic structural diagram of an AI model-based operation recommendation apparatus according to an embodiment of this application;
FIG. 8 is a second schematic structural diagram of an AI model-based operation recommendation apparatus according to an embodiment of this application;
FIG. 9 is a third schematic structural diagram of an AI model-based operation recommendation apparatus according to an embodiment of this application;
FIG. 10 is a schematic structural diagram of a communication device according to an embodiment of this application;
FIG. 11 is a schematic structural diagram of a terminal according to an embodiment of this application; and
FIG. 12 is a schematic structural diagram of a network-side device according to an embodiment of this application.

### DETAILED DESCRIPTION OF EMBODIMENTS

The terms "first", ''second'', and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6^{th} Generation, 6G) communication system.

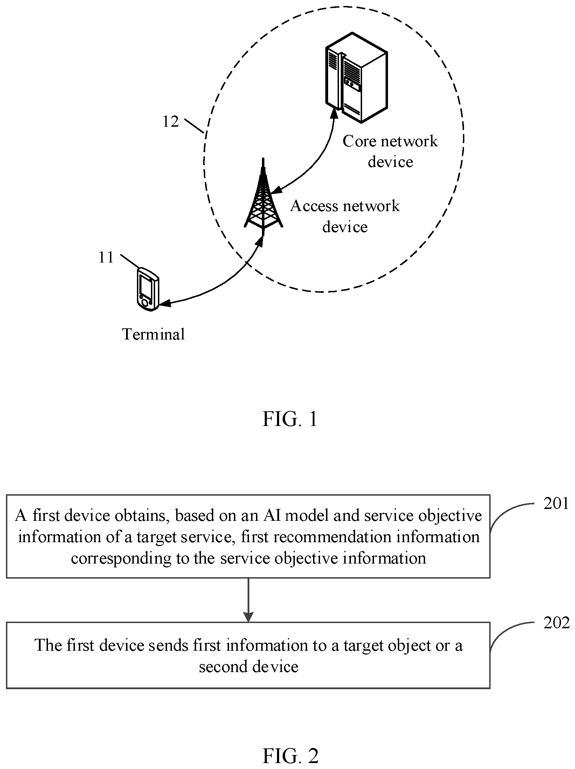

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a smart wrist band, smart earphones, smart glasses, smart jewelry (smart bracelet, smart bangles, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a network data analytics function (Network Data Analytics Function, NWDAF), and the like. The NWDAF may be divided into: an NWDAF containing (containing) an analytics logical function (Analytics logical function, Anlf) or an NWDAF containing a model training logical function (Model Training logical function, MTLF). It should be noted that in the embodiments of this application, only the core network device in the NR system is introduced as an example, and the specific type of the core network device is not limited.

For ease of understanding, the following describes some content involved in the embodiments of this application:
Currently, the network data analytics function (Network Data Analytics Function, NWDAF) provides outputs per analytic ID (per analytic ID). For example, 23.288 specifies key outputs for observed service experience (observed service experience, OSE), and the NWDAF predicts service experience values (service experience value) corresponding to specific network (Network, NW) environment configurations.

A consumer device (such as a PCF) considers such output (such as the service experience value) and determines whether and how to perform related operation actions (action), for example, how to increase bandwidth, or how to increase the priority of voice services.

Due to a low intelligence level of the consumer device, the determined operation actions cannot adapt to complex network environments, resulting in relatively poor network performance. For this reason, an AI model-based operation recommendation method of this application is proposed.

The following specifically describes the AI model-based operation recommendation method provided in the embodiments of this application through specific embodiments and application scenarios thereof with reference to the accompanying drawings.

Referring to FIG. 2, an embodiment of this application provides an AI model-based operation recommendation method. As shown in FIG. 2, the AI model-based operation recommendation method provided by this embodiment of this application includes the following steps.

Step 201: A first device obtains, based on an AI model and service objective information of a target service, first recommendation information corresponding to the service objective information, where the service objective information is used to indicate a service objective expected to be achieved, and the first recommendation information is used to determine an operation associated with the target service.

Step 202: The first device sends first information to a target object or a second device, where the first information includes the first recommendation information, and the target object is a device or a function for performing the operation.

In this embodiment of this application, the AI model can be construed as or replaced by a machine learning (Machine Learning, ML) model. The target service can be understood as at least one of a specific application service (such as applications) and a general service within the network (such as mobility management, session management, access registration, cell handover, or slice selection).

Optionally, the first device may be an AI entity (having AI-related functions). For example, the first device may include one or more AI entities. In a case that the first device includes one AI entity, the AI entity may include an AI inference function. In a case that the first device includes multiple AI entities, one of the AI entities may include an inference function, and the other AI entities may include an AI training function; and the AI entity used for inference may request or obtain, from other AI entities, an AI model for inference. The AI entity may be construed as or replaced by an AI function, an AI device, or the like, which is not further limited here.

Optionally, in some embodiments, the first device may obtain the first recommendation information through AI model inference based on the service objective information of the target service. In this way, the first recommendation information is obtained through AI model inference so that recommendation information suitable for the current network environment and satisfying the service objective information can be obtained by comprehensively considering multiple factors. Therefore, after the target object performs an operation associated with the target service based on the first recommendation information, network performance may be improved, thereby enhancing reliability of execution of the target service. The first recommendation information may be implicit or explicit recommendation information. For example, in an implementation, the first recommendation information does not contain any recommendation indication information in its name or content, and only has a recommendation effect in actual function or use. In another implementation, the first recommendation information carries recommendation indication information in its name or content, explicitly indicating a recommendation effect.

Optionally, in some embodiments, the service objective information may include at least one of the following: metrics of service (Metrics of service); and a required value of each metric (Required value of each metric). The service objective may be construed as or replaced by a service requirement value or a service requirement objective. In some embodiments, the service objective information may include at least one of the following:
service MOS≥4;
a specific slice load being as small as possible; and
all UEs camping on a 5G network as much as possible.

Optionally, in some embodiments, the target object is a device or a function configured to perform the operation. For example, the target object may include at least one of the following: an access and mobility management function AMF, a session management function SMF, a user plane function UPF, a policy control function entity PCF, a terminal UE, an application function AF, an access network RAN, and an operation, administration and maintenance (Operation Administration and Maintenance, OAM).

Optionally, in some embodiments, the second device may be a device or a function configured to generate second information based on first information. For example, the second device may be construed as or replaced by a consumer device, specifically, the second device may include a PCF, an AMF, an SMF, an OAM, and the like.

It should be understood that in embodiments of this application, the first device obtains the first recommendation information corresponding to the service objective information, and may directly send the recommendation information to the target object, that is, the first device sends the first information to the target object; or may indirectly send the recommendation information to the target object through the second device, that is, the first device sends the first information to the second device. The second device sends the second information to the target object, where the second information is determined based on the first information. For example, content of the second information may be consistent with content of the first information, or the second information may be obtained by the second device by updating at least part of the content in the first information.

In embodiments of this application, the first device obtains, based on an AI model and service objective information of a target service, first recommendation information corresponding to the service objective information, where the service objective information is used to indicate a service objective expected to be achieved, and the first recommendation information is used to determine an operation associated with the target service; and the first device sends first information to a target object or a second device, where the first information includes the first recommendation information, and the target object is a device or a function for performing the operation. In this way, the first recommendation information is obtained based on the AI model, so that recommendation information suitable for the current network environment and satisfying the service objective information can be obtained by comprehensively considering multiple factors. Therefore, in the embodiments of this application, network performance can be improved, thereby enhancing reliability of execution of the target service.

Optionally, in some embodiments, the first device may proactively determine the first recommendation information and send the first recommendation information to the target object or the second device, or the second device may request the first recommendation information. For example, in some embodiments, the method further includes:
receiving, by the first device, a request message from the second device, where the request message includes at least one of the following:
service objective information of the target service;
AI task type information;
service type information of the target service;
first indication information, where the first indication information is used to indicate a request to obtain recommendation information corresponding to the service objective information;
second indication information, where the second indication information is used to indicate a type of requested recommendation information, and the type of recommendation information includes a recommended operation or a recommended value of a parameter;
third indication information, where the third indication information is used to indicate a quantity of requested recommendation information;
information of the target object, where the information of the target object is used to indicate the target object;
network state information, used to indicate a current or future network state, where the network state information is used to obtain recommendation information corresponding to the network state; and
condition information associated with the first recommendation information.

Optionally, the quantity of requested recommendation information may be indicated by one or multiple indicators (one or multiple indicator), or a requested quantity N may be indicated, for example, N equals 3.

Optionally, the network state information may include network load, UE location, AMF load, 5QI or QoS parameters of the target service, UE RAT, and the like. The network state may include a state of a network device, a user-related state, a service AF state, and the like.

Optionally, the expression form of the service objective information may be a service objective parameter type and a requirement (requirement) to be satisfied by the service objective parameter type. This requirement may be a specific value, a hierarchical representation, or an upper threshold or a lower threshold. The service objective parameter type may be one or more, and the corresponding requirements may be one or more. For example, requesting a service (service) mean opinion score (Mean Opinion Score, MOS) greater than 4, or requesting a quality of service (Quality of Service, QoS) bit rate (bit rate) greater than 100 Mbps. For example, in some embodiments, the service objective information may be a required service (required service) MOS.

Optionally, an optional expression form of the AI task type information may be a task identifier, that is, the AI task type information may be construed as or replaced by AI task identification information. The AI task type information is used to indicate a type of AI task or to indicate a specific purpose or objective corresponding to the AI task. For example, using a task identifier (analytics ID) being equal to service experience (service experience) as an example, it indicates service experience prediction or guarantee.

Optionally, the service type information is a specific service type indicated by, for example, an application ID (application ID) or a service ID (service ID).

Optionally, the information of the target object is used to identify the target object for which the first device is requested to perform operation recommendation. Specifically, it may include information of one or more target objects, for example, it may include an ID, FQDN, URL, IP address, MAC address, and the like of the target object.

Optionally, in some embodiments, the condition information may include one or more limiting conditions, and the limiting condition is used to indicate an applicable scope of the first recommendation information. For example, it may include at least one of the following: a single network slice selection assistance information (Single Network Slice Selection Assistance Information, S-NSSAI) condition for a slice to which the first recommendation information is applicable, an AOI condition to which the first recommendation information is applicable, a DNN condition to which the first recommendation information is applicable, and a bandwidth condition to which the first recommendation information is applicable.

For example, in some embodiments, the condition information includes limiting the slice to slice A, and then the first device may generate, based on related information of slice A, first recommendation information applicable to slice A.

It should be noted that the request message may be a request and response mode message. In this mode, the second device specifies one piece of service objective information, and the first device feeds back recommendation information that can satisfy the service objective information.

Optionally, the request message may alternatively be a subscription and notification mode message. In this mode, the second device specifies one service objective, and the first device, when detecting or predicting that the service objective information reaches a threshold value (such as being greater than or equal to a threshold value, or less than or equal to the threshold value), feeds back recommendation information, which is used for the target object to perform a corresponding operation based on the recommendation information, thereby ensuring that the service objective information is satisfied.

Optionally, in some embodiments, in a case that the first device sends the first information to the second device, the first information is used to trigger the second device to send second information to the target object, the second information includes second recommendation information, and the second recommendation information is determined based on the first recommendation information. The target object being a device or a function configured to perform the operation.

In the embodiments of this application, after receiving the first information, the second device may determine second information based on the first information; then send the second information to the target object.

Optionally, the determining, by the second device, second information based on the first information includes:
determining, by the second device, second recommendation information, where the second recommendation information includes at least one of the following: the first recommendation information, and recommendation information determined based on the first recommendation information; and
generating, by the second device, the second information based on the second recommendation information.

In the embodiments of this application, the second device may replace the first recommendation information in the first information to obtain the second information.

Optionally, in some embodiments, the first information further includes at least one of the following:
a reason or purpose of recommendation;
information about a target object corresponding to the first recommendation information;
prediction information of a service objective;
fourth indication information, where the fourth indication information is used to indicate whether alternative recommendation information is present in the first device, or is used to indicate whether the second device or the target object is allowed to request replacement of the first recommendation information;
fifth indication information, where the fifth indication information is used to indicate a type of the first recommendation information, and the type of the first recommendation information includes a recommended operation or a recommended value of a parameter; and
recommendation indication information (recommendation indication), where the recommendation indication information is used to indicate that the first recommendation information is information for a recommendation purpose.

The prediction information for the service objective may be understood as an estimated value that can be satisfied by a corresponding service requirement, an indicator, or a service indicator after a corresponding operation is performed based on the first recommendation information. For example, for the service objective being that all UEs reside in the 5G network as much as possible, prediction information corresponding to the service objective may be understood as terminals camping on the 5G network are predicted to reach 90 percent. For the service objective service being MOS≥4, prediction information corresponding to the service objective may be understood as a predicted value of the service MOS is 4.5.

Optionally, in some embodiments, the first recommendation information includes at least one of the following:
a recommended operation associated with the target service; and
a recommended value of a parameter associated with the target service.

Optionally, the recommended operation may be understood as a specific operation to be performed, for example, recommending a session control action to the SMF, or recommending to the AMF how to perform a load balancing operation.

Optionally, the recommended value may be understood as a parameter value that assists in determining a specific operation to be performed. For example, an SM policy value recommended for the SMF or PCF is used to indicate the SMF to perform a session control operation based on the recommended SM policy value. For example, if an S-NSSAI value of a PDU session (session) is recommended, the SMF selects a slice corresponding to the PDU session accordingly. For another example, a QoS parameter value is recommended to the PCF, and the PCF adjusts a QoS parameter of a service based on the QoS parameter value.

Optionally, in some embodiments, the first information includes at least one piece of the first recommendation information;
each piece of the first recommendation information includes at least one recommended operation corresponding to the target object or a recommended value of at least one parameter corresponding to the target object.

Optionally, in some embodiments, in a case that the first information includes multiple pieces of the first recommendation information, the first information further includes at least one of the following:
sixth indication information, where the sixth indication information is used to indicate a quantity of the first recommendation information; and
identification information of each piece of first recommendation information.

Optionally, in some embodiments, the method further includes:
receiving, by the first device, first feedback information from the second device or the target object, where the first feedback information includes at least one of the following:
seventh indication information, where the seventh indication information is used to indicate whether the second device or the target object accepts the first recommendation information; and
reason information for the second device or the target object rejecting the first recommendation information.

In the embodiments of this application, the target object may directly send feedback information to the first device, or may indirectly send feedback information to the first device through the second device. For example, the second device may receive second feedback information from the target object, and then determine the first feedback information based on the second feedback information. the second feedback information includes at least one of the following:
eighth indication information, where the eighth indication information is used to indicate whether the target object accepts the second recommendation information; and
reason information for the target object rejecting the second recommendation information.

Optionally, in a case that the second information includes multiple pieces of second recommendation information, the second feedback information further includes identification information of the second recommendation information.

In the embodiments of this application, the identification information of the second recommendation information may be specifically understood as identification information of accepted or rejected second recommendation information.

Optionally, after receiving the second feedback information, the second device may re-determine second recommendation information. For example, in some embodiments, the second device re-determining the second recommendation information includes at least one of the following:
re-determining, by the second device, second recommendation information based on the first recommendation information; and
re-obtaining, by the second device, first recommendation information from the first device, and re-determining second recommendation information based on the re-obtained first recommendation information.

Optionally, in an example, the second device re-determining the second recommendation information based on the first recommendation information may include the following cases: in a case that the second device receives multiple pieces of first recommendation information, re-selecting one piece of the first recommendation information as the second recommendation information, or re-selecting one piece of the first recommendation information and determining the second recommendation information based on the re-selected first recommendation information.

Optionally, in some embodiments, in a case that the first information includes multiple pieces of first recommendation information, the first feedback information further includes identification information of the first recommendation information.

In the embodiments of this application, the identification information of the first recommendation information may be specifically understood as identification information of accepted or rejected first recommendation information.

Optionally, in some embodiments, in a case that the first feedback information includes the seventh indication information, and the seventh indication information indicates that the second device or the target object rejects the first recommendation information, the method further includes:
re-determining, by the first device, first recommendation information, and sending the re-determined first recommendation information to the second device or the target object.

In the embodiments of this application, when only one piece of first recommendation information is delivered, first recommendation information may be regenerated. When multiple pieces of first recommendation information are sent, one piece of first recommendation information may be re-selected.

Optionally, in some embodiments, in a case that the first feedback information includes the seventh indication information, and the seventh indication information indicates that the second device or the target object accepts the first recommendation information, the method further includes:
sending, by the first device, identification information of the first recommendation information included in the first feedback information to other target objects.

In the embodiments of this application, when the first device sends multiple pieces of first recommendation information, and the second device or the target object accepts only one of them and feeds back the accepted one piece of first recommendation information to the first device, the first device sends identification information of the accepted first recommendation information to other target objects. For example, the first device sends multiple pieces of first recommendation information to each of multiple target objects. Upon receiving first feedback information sent by one of the target objects, the first feedback information carrying identification information of only one accepted piece of first recommendation information, the first device may send the identification information of the first recommendation information carried in the first feedback information to other target objects. In this way, multiple target objects can be coordinated to use the same first recommendation information, avoiding uncoordinated operations.

Optionally, in some embodiments, the first recommendation information includes at least one of the following:
information about a recommended terminal device policy;
information about a recommended access control policy; and
information about a recommended session control policy.

Optionally, the terminal device policy may include, but is not limited to, URSP routing policy, Access Network Discovery & Selection Policy (ANDSP), Proxy policy, and the like. In other words, the first recommendation information may include a recommended operation or a parameter recommended value associated with the URSP, ANDSP, or Proxy policy for the terminal.

Optionally, the access control policy may include, but is not limited to, service area restrictions (service area restrictions) policy, RFSP Index policy, UE-AMBR policy, terminal Slice-MBR policy, SMF selection policy, and the like. In other words, the first recommendation information may include a recommended operation or a parameter recommended value associated with service area restrictions, RFSP index, UE-AMBR, UE slice-MBR, and SMF selection.

Optionally, the session control policy may include, but is not limited to, QoS control policy, charging policy, traffic steering policy, and the like. In other words, the first recommendation information may include a recommended operation or a parameter recommended value associated with QoS control, charging, and traffic steering

To better understand this application, the following are detailed descriptions based on some specific examples.

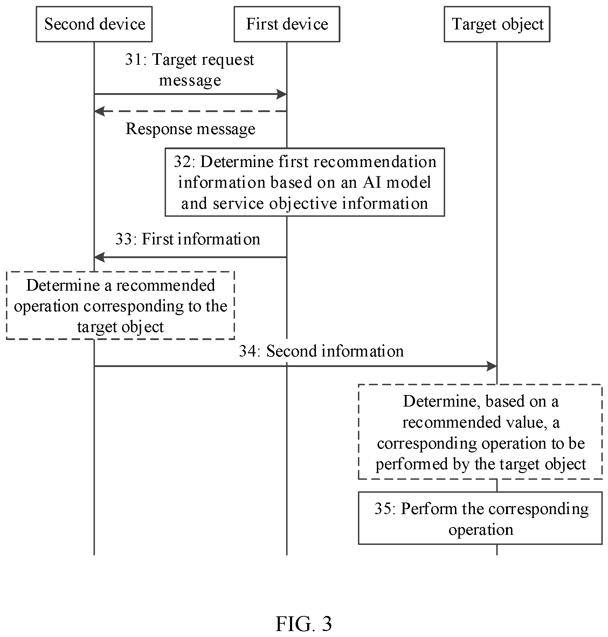

Embodiment 1: As shown in FIG. 3, in some embodiments, the AI model-based operation recommendation method may include the following procedure.

Step 31: A second device (such as a 5G PCF) sends a request message to a first device (such as an NWDAF) to obtain first recommendation information corresponding to an operation.

The operation may be an operation corresponding to the second device, or an operation recommended by other devices or entities. The first recommendation information may include at least one of the following: a recommendation on how the PCF sets QoS parameters or PCC policies, a recommendation on how the SMF sets SM policies, and an operation recommendation on how the AMF performs network element load balancing.

For content of the request message, reference may be made to the above embodiments, and details are not repeated here.

Step 32: Based on an AI model and according to the service objective information obtained by the second device in step 31, the first device obtains one or more pieces of first recommendation information.

The one or more pieces of first recommendation information are not limited to the second device, but may alternatively be for other functional entities.

Optionally, the AI model may be pre-trained by the first device, or may be requested and obtained by the first device from other first devices, which is not further limited here. A model generation method may be a traditional centralized model training method, a distributed model training method, a general large model generation method, or the like, which is not limited here either.

Step 33: The first device sends first information to the second device, where the first information is used to inform the second device of the first recommendation information determined by the first device.

Optionally, the first information may include at least one of the following:
1. A recommended value for a target object, used to indicate the target object to perform a corresponding operation, such as SM policy information recommended for an SMF (used to indicate the SMF to perform a session control operation accordingly, for example, if an S-NSSAI value of a PDU session is recommended, the SMF selects a slice corresponding to the PDU session accordingly), a recommended value of a QoS parameter recommended for a PCF (used to indicate the PCF to set a QoS parameter of a service based on the information, for example, if a QoS bit rate > 100Mbps is recommended, the PCF sets an authorized (authorized) QoS bit rate value in QCI or QoS characteristics (Characteristics)), and a load balancing recommendation recommended for an AMF (used to indicate the AMF to perform a load control operation based on the information, for example, if the AMF load (load) CPU utilization is recommended to be less than 60%, the AMF sets the number of users/UEs accordingly).

In an example, the first information may include multiple alternative (alternative) recommended values, where each alternative recommended value includes a combination (combination) of recommended values for one or more target objects, and a recommended value for one target object may alternatively be a combination of multiple recommended values for that target object, as shown in Table 1.

**Table 1**

| | Target object 1 (for example, the PCF) | Target object 2 (for example, the SMF) | Target object 3 (for example, the AMF) |
|---|---|---|---|
| Alternative recommendation information 1 (alternative 1= combination 1) | Recommended info 1 for the PCF (5QI for service flow) Recommended info 2 for the PCF (gate status for service flow) | Recommended info 1 for the SMF (S-NSSAI for service flow) | Recommended info 1 for the AMF (AMF load<65%) Recommended info 2 for the AMF (UE location in TAI) |
| Alternative recommendation information 2 (alternative2= combination 2) | Recommended info 1 for the PCF (Maximum Data Burst Volume) | Recommended info 1 for the SMF (QoS characteristic for service flow) | Recommended info 1 for the AMF (S-NSSAI for UE) |
| ... | ... | ... | ... |

In an example, the first information includes only one recommended value, that is, the first device may select one recommended value from multiple alternative recommended values. The first device may determine the final recommended value based on specific configurations or algorithms. In this case, optionally, the first device may send indication information to inform the second device or the target object that the recommended value is one of the alternatives, meaning the recommended value can be modified.

2. A recommended operation for a target object. The difference from the above recommended value is that the first device directly provides a recommended action for the target object to perform, for example, recommending a session control action to the SMF, or recommending to the AMF how to perform a load balancing operation. In an implementation, the first information may include multiple alternative (alternative) recommended operations, where each alternative recommended operation includes recommended operations for one or more target objects, and a recommended operation for one target object may alternatively be a combination of multiple different operations for the object.

3. A recommendation purpose or reason information. The information is used to explain the reason or purpose for the first device sending the recommended value or recommended operation. For example, the reason information is that the service experience statistics do not meet the standard, or that the service experience is expected not to meet the standard, and so on. The sending of the purpose or reason information generally occurs in scenarios where the first device is subscribed to monitor service objective information for a relatively long period. That is, in a case that the first device detects that the service objective information cannot be achieved, the first device sends a recommended value or recommended operation to the target object, and the first device also sends the above recommendation purpose or reason to the target object.

4. Information of the target object.

5. Prediction information of the service objective corresponding to the first recommendation information. When the first device sends multiple alternative recommended values or multiple alternative recommended operations (that is, multiple alternatives), the service objective here may alternatively be a prediction of the service objective that may be achieved correspondingly by a different alternative. For example, alternative 1 is expected to achieve service MOS=4, and alternative 2 is expected to achieve service MOS=4.5.

Optionally, before step 33, the second device may inform whether the request message is accepted or executed by the first device. Specifically, it may be informed in the form of a response to the request message.

It should be noted that the first device sending the content of the first information to the second device, and the second device subsequently determining whether to send part or all of the content to the target object is only one implementation. In some embodiments, the first device may alternatively send part or all of the content of the first information directly to one or more target objects. The one or more target objects may be informed by the second device, or may be determined by the first device itself.

Step 34: The second device sends second information to one or more target objects to notify recommendation information for the target objects.

The second information may include at least one of the following:
a recommended value for the target object, for example, when the target object is an AMF, the recommendation information here is AMF load<65%;
a recommended operation for the target object, for example, when the target object is an AMF, the operation recommended here is to remove 20% of idle or low activity UEs in the AMF; and
prediction information of a service objective that can be achieved by corresponding second recommendation information (that is, the recommended value or recommended operation).

It should be noted that the content included in the second information is determined based on the content in the first information. In one example, the second device may directly send the recommended value for the target object received from the first device to the target object device (that is, forward it). In another example, the second device may alternatively incorporate its own judgment logic, combine the content in the received first information with its own information input, and determine the second information for the target object. For example, the PCF as the second device receives the first information from the first device, which includes recommended values for multiple target objects, such as S-NSSAI for service flow recommended for the SMF, and DNN for service flow and location for UE (DNN for service flow and location for UE) recommended for the AMF. The PCF sets a UE AM policy based on the recommendation information for the AMF and sends the UE AM policy to the AMF, so as to perform a corresponding access control operation. The PCF sets a UE SM policy based on the recommendation information for the SMF and sends the UE SM policy to the SMF, so as to perform a corresponding session control operation.

Optionally, before step 34, the second device may determine the recommended operation corresponding to each target object, and then sends the corresponding recommended operation to the target object.

Step 35: The target object performs a corresponding operation based on the second information.

In an example, the target object may directly perform the recommended operation in the second information, or perform an operation corresponding to the recommended value in the second information.

In an example, the target object only uses the content in the second information as a reference to determine whether to perform and what operation to perform.

Optionally, in a case that the second information includes a recommended value for the target object, the target object may determine, based on the recommended value in the second information, an operation to be performed.

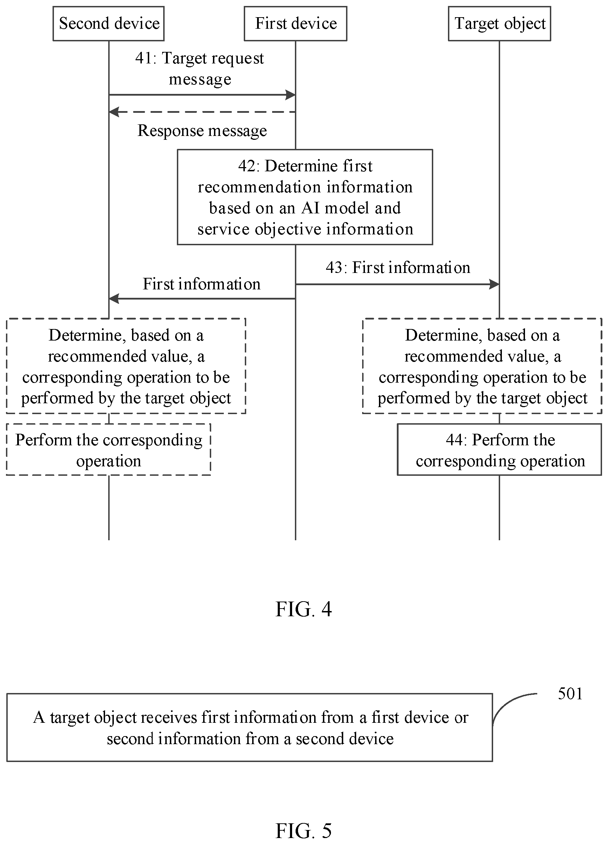

Embodiment 2: As shown in FIG. 4, in some embodiments, the AI model-based operation recommendation method may include the following procedure.

Steps 41 and 42 are the same as steps 31 and 32, and details are not described again here.

Step 43: The first device directly sends first information to the target object.

Step 44 is the same as step 35, and details are not described again here.

Optionally, if the second device is one of the target objects, the first device may send the first information to the second device, and the second device performs step 44.

Embodiment 3: In some embodiments, the main idea for the AI to obtain the first recommendation information corresponding to the service objective information based on the AI model and the service objective information of the target service is: in a case that the specified model outputs a result Y, inversely inferring, based on the AI model, a model input X corresponding to Y.

For example, according to the requirement of the second device (Y=service objective information, such as service MOS≥3.0), based on the AI model, the first device comprehensively considers multiple influencing factors (other limiting conditions, or specified requirements, such as xᵢ<100), and inversely infers the model input X, that is, x=f ⁻¹ (y), where X is a multi-input vector (x₁, x₂, x₃...xₙ), and each element in the X vector corresponds to a different network operation.

The expression corresponding to the AI model is: $y = f \left(x\right) = {w}_{0} {x}_{0} + {w}_{1} {x}_{1} + ⋯ + {w}_{D} {x}_{D} .$

In this embodiment:
1. It is assumed that the AI model already exists (trained by the first device itself, or obtained by the first device from other first device, or obtained by using other methods).
2. Service objective information or condition information is given, where the service objective information or condition information may include one or more actual service objectives (such as Y=service mos≥3), and other limiting conditions (xᵢ=GBR<100Mbps, xj=MBR<256Mbps).
3. The first device, based on the AI model and the service objective information, may specifically use a multi-objective optimization method (such as the NSGA method) to determine a value of the corresponding model input X vector. X=(x₁,x₂...xₙ), each element xᵢ may correspond to one or more network operations, for example, xᵢ=GBR corresponds to the guaranteed bandwidth resource allocation and regulation operation for the air interface of the access network device.
4. Optionally, in an implementation, the first device uses the obtained value of the X=(x₁,x₂...xₙ) vector as the recommendation information for the corresponding network-related device, such as x₁=4G RAT, x₂=UE location=TAI 1, .... xᵢ=GBR=100Mbps, xj=MBR=256Mbps ....

In another implementation, the first device may map out recommended operation information for the network-related device based on the value of the X=(x₁,x₂...xₙ) vector, such as action 1 (the AMF needs to trigger switching a UE RFSP from a 5G RAT corresponding index to a 4G RAT corresponding index, RFSP index1->RFSP index2), or action 2 (the RAN needs to adjust a GBR air interface bandwidth resource corresponding to the UE service flow from 50MHZ to 100MHZ).

It should be noted that X=(x₁,x₂...xₙ) obtained by the first device may have multiple values that satisfy the above service objective information or condition information.

Embodiment 4: In some embodiments, the network recommendation scheme for service MOS score is as follows:
1. The PCF (a second device) sends a request message to the NWDAF (a first device), specifying a communication service objective such as service MOS≥4 for application ID 1. Optionally, the type of requested recommendation may alternatively be specified as QoS parameter setting, that is, requesting the first device to recommend how to set QoS parameters.
2. The NWDAF performs model inverse inference based on the AI model and service objective information to obtain the values of the model input X=(x₁,x₂...xₙ) vector corresponding to the objective (service MOS≥4). The specific method for inverse inference may be a multi-objective optimization method.
3. The NWDAF obtains operation recommendations corresponding to various target objects based on the values of the X=(x₁,x₂...xₙ) vector. The X vector may have multiple possible combinations, for example, according to recommendation 1: x₁=4G RAT, x₂=UE location=TAI 1, .... xᵢ=GBR=100Mbps..., or recommendation 2: x₁=5G RAT, x₂=UE location=TAI 2,....xᵢ=GBR=200Mbps....
4. Further, the NWDAF maps and obtains the combination of target object actions corresponding to each combination of X vectors, and sends each action combination to a corresponding target object for execution.

Referring to FIG. 5, an embodiment of this application further provides an AI model-based operation recommendation method. As shown in FIG. 5, the AI model-based operation recommendation method includes the following steps.

Step 501: A target object receives first information from a first device or second information from a second device.

The first information includes first recommendation information, the first recommendation information is determined based on an AI model and service objective information of a target service, the service objective information is used to indicate a service objective expected to be achieved, and the first recommendation information is used to determine an operation associated with the target service; and
the second information includes second recommendation information, the second recommendation information is determined based on the first recommendation information, and the target object is a device or a function for performing the operation.

Optionally, in a case that the target object receives the first information from the first device, the method further includes:
sending, by the target object, first feedback information to the first device, where the first feedback information includes at least one of the following:
seventh indication information, where the seventh indication information is used to indicate whether the target object accepts the first recommendation information; and
reason information for the target object rejecting the first recommendation information.

Optionally, in a case that the first information includes multiple pieces of first recommendation information, the first feedback information further includes identification information of the first recommendation information.

Optionally, in a case that the first feedback information includes the seventh indication information, and the seventh indication information indicates that the target object rejects the first recommendation information, the method further includes:
receiving, by the target object, re-determined first recommendation information from the first device.

Optionally, in a case that the target object receives the second information from the second device, the method further includes:
sending, by the target object, second feedback information to the second device; where
the second feedback information includes at least one of the following:
   eighth indication information, where the eighth indication information is used to indicate whether the target object accepts the second recommendation information; and
   reason information for the target object rejecting the second recommendation information.

Optionally, in a case that the second information includes multiple pieces of second recommendation information, the second feedback information further includes identification information of the second recommendation information.

Optionally, in a case that the second feedback information includes the eighth indication information, and the eighth indication information indicates that the target object rejects the second recommendation information, the method further includes:
receiving, by the target object, re-determined second recommendation information from the second device.

Optionally, the method further includes:
determining, by the target object, whether to accept the target recommendation information, where the target recommendation information is the first recommendation information or the second recommendation information.

Optionally, the target recommendation information includes at least one of the following:
a recommended operation associated with the target service; and
a recommended value of a parameter associated with the target service.

Optionally, in a case that the target object accepts the target recommendation information, the method further includes:
determining, by the target object, a target operation based on the target recommendation information; and
performing, by the target object, the target operation.

Optionally, the determining, by the target object, a target operation based on the target recommendation information includes at least one of the following:
determining the target operation based on the recommended operation associated with the target service in the target recommendation information; and
determining the target operation based on the recommended value of the parameter associated with the target service in the target recommendation information.

Optionally, the target object includes at least one of the following: an access and mobility management function AMF, a session management function SMF, a user plane function UPF, a policy control function entity PCF, a terminal UE, an application function AF, an access network RAN, and an operation administration and maintenance OAM.

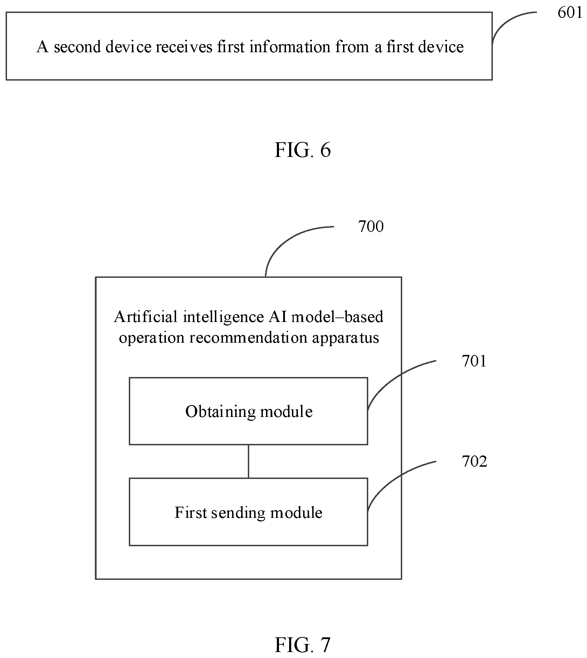

Referring to FIG. 6, an embodiment of this application further provides an AI model-based operation recommendation method. As shown in FIG. 6, the AI model-based operation recommendation method includes the following steps.

Step 601: A second device receives first information from a first device.

The first information includes first recommendation information, the first recommendation information is determined based on an AI model and service objective information of a target service, the service objective information is used to indicate a service objective expected to be achieved, and the first recommendation information is used to determine an operation associated with the target service.

Optionally, the method further includes:
determining, by the second device, second information based on the first information; and
sending, by the second device, the second information to a target object; where
the second information includes second recommendation information, the second recommendation information is determined based on the first recommendation information, and the target object is a device or a function for performing the operation.

Optionally, the determining, by the second device, second information based on the first information includes:
determining, by the second device, second recommendation information, where the second recommendation information includes at least one of the following: the first recommendation information, and recommendation information determined based on the first recommendation information; and
generating, by the second device, the second information based on the second recommendation information.

Optionally, the method further includes:
receiving, by the second device, second feedback information from the target object; where
the second feedback information includes at least one of the following:
   eighth indication information, where the eighth indication information is used to indicate whether the target object accepts the second recommendation information; and
   reason information for the target object rejecting the second recommendation information.

Optionally, in a case that the second information includes multiple pieces of second recommendation information, the second feedback information further includes identification information of the second recommendation information.

Optionally, the method further includes: determining, by the second device, first feedback information based on the second feedback information.

Optionally, in a case that the second feedback information includes the eighth indication information, and the eighth indication information indicates that the target object rejects the second recommendation information, the method further includes:
re-determining, by the second device, second recommendation information; and
sending, by the second device, the re-determined second recommendation information to the target object.

Optionally, the re-determining, by the second device, second recommendation information includes at least one of the following:
re-determining, by the second device, second recommendation information based on the first recommendation information; and
re-obtaining, by the second device, first recommendation information from the first device, and re-determining second recommendation information based on the re-obtained first recommendation information.

Optionally, the second recommendation information includes at least one of the following:
a recommended operation associated with the target service; and
a recommended value of a parameter associated with the target service.

Optionally, the second information includes at least one piece of the second recommendation information;
each piece of the second recommendation information includes at least one recommended operation corresponding to the target object or a recommended value of at least one parameter corresponding to the target object.

Optionally, in a case that the second information includes multiple pieces of second recommendation information, the second information further includes at least one of the following:
ninth indication information, where the ninth indication information is used to indicate a quantity of the second recommendation information; and
identification information of each piece of second recommendation information.

Optionally, the second information further includes at least one of the following:
a reason or purpose of recommendation;
prediction information of a service objective;
tenth indication information, where the tenth indication information is used to indicate whether alternative recommendation information is present in the second device, or is used to indicate whether the target object is allowed to request replacement of the second recommendation information;
eleventh indication information, where the eleventh indication information is used to indicate a type of the second recommendation information, and the type of the second recommendation information includes a recommended operation or a recommended value of a parameter; and
recommendation indication information, where the recommendation indication information is used to indicate that the second recommendation information is information for a recommendation purpose.

Optionally, the second recommendation information includes at least one of the following:
information indicating a recommended terminal device policy;
information indicating a recommended access control policy; and
information indicating a recommended session control policy.

Optionally, the method further includes:
sending, by the second device, a request message to the first device, where the request message includes at least one of the following:
service objective information of the target service;
AI task type information;
service type information of the target service;
first indication information, where the first indication information is used to indicate a request to obtain recommendation information corresponding to the service objective information;
second indication information, where the second indication information is used to indicate a type of requested recommendation information, and the type of recommendation information includes a recommended operation or a recommended value of a parameter;
third indication information, where the third indication information is used to indicate a quantity of requested recommendation information;
information of the target object, where the information of the target object is used to indicate the target object;
network state information, used to indicate a current or future network state, where the network state information is used to obtain recommendation information corresponding to the network state; and
condition information associated with the first recommendation information.

Optionally, the method further includes:
sending, by the second device, first feedback information to the first device, where the first feedback information includes at least one of the following:
seventh indication information, where the seventh indication information is used to indicate whether the target object or the second device accepts the first recommendation information; and
reason information for the target object or the second device rejecting the first recommendation information.

Optionally, in a case that the first information includes multiple pieces of first recommendation information, the first feedback information further includes identification information of the first recommendation information.

Optionally, the target object includes at least one of the following: an access and mobility management function AMF, a session management function SMF, a user plane function UPF, a policy control function entity PCF, a terminal UE, an application function AF, an access network RAN, and an operation administration and maintenance OAM.

The execution subject of the AI model-based operation recommendation method provided in the embodiments of this application may be an AI model-based operation recommendation apparatus. In the embodiments of this application, the AI model-based operation recommendation apparatus provided in the embodiments of this application is described by using the AI model-based operation recommendation method being executed by the AI model-based operation recommendation apparatus as an example.

Referring to FIG. 7, an embodiment of this application further provides an AI model-based operation recommendation apparatus, applied to a first device. As shown in FIG. 7, the AI model-based operation recommendation apparatus 700 includes:
an obtaining module 701, configured to: based on an AI model and service objective information of a target service, obtain first recommendation information corresponding to the service objective information, where the service objective information is used to indicate a service objective expected to be achieved, and the first recommendation information is used to determine an operation associated with the target service; and
a first sending module 702, configured to send first information to a target object or a second device, where the first information includes the first recommendation information, and the target object is a device or a function for performing the operation.

Optionally, the AI model-based operation recommendation apparatus 700 further includes:
a first receiving module, configured to receive a request message from the second device, where the request message includes at least one of the following:
service objective information of the target service;
AI task type information;
service type information of the target service;
first indication information, where the first indication information is used to indicate a request to obtain recommendation information corresponding to the service objective information;
second indication information, where the second indication information is used to indicate a type of requested recommendation information, and the type of recommendation information includes a recommended operation or a recommended value of a parameter;
third indication information, where the third indication information is used to indicate a quantity of requested recommendation information;
information of the target object, where the information of the target object is used to indicate the target object;
network state information, used to indicate a current or future network state, where the network state information is used to obtain recommendation information corresponding to the network state; and
condition information associated with the first recommendation information.

Optionally, in a case that the first information is sent to the second device, the first information is used to trigger the second device to send second information to the target object, the second information includes second recommendation information, and the second recommendation information is determined based on the first recommendation information.

Optionally, the first information further includes at least one of the following:
a reason or purpose of recommendation;
information about a target object corresponding to the first recommendation information;
prediction information of a service objective;
fourth indication information, where the fourth indication information is used to indicate whether alternative recommendation information is present in the first device, or is used to indicate whether the second device or the target object is allowed to request replacement of the first recommendation information;
fifth indication information, where the fifth indication information is used to indicate a type of the first recommendation information, and the type of the first recommendation information includes a recommended operation or a recommended value of a parameter; and
recommendation indication information, where the recommendation indication information is used to indicate that the first recommendation information is information for a recommendation purpose.

Optionally, the first recommendation information includes at least one of the following:
a recommended operation associated with the target service; and
a recommended value of a parameter associated with the target service.

Optionally, the first information includes at least one piece of the first recommendation information;
each piece of the first recommendation information includes at least one recommended operation corresponding to the target object or a recommended value of at least one parameter corresponding to the target object.

Optionally, in a case that the first information includes multiple pieces of first recommendation information, the first information further includes at least one of the following:
sixth indication information, where the sixth indication information is used to indicate a quantity of the first recommendation information; and
identification information of each piece of first recommendation information.

Optionally, the AI model-based operation recommendation apparatus 700 further includes:
a first receiving module, configured to receive first feedback information from the second device or the target object, where the first feedback information includes at least one of the following:
seventh indication information, where the seventh indication information is used to indicate whether the second device or the target object accepts the first recommendation information; and
reason information for the second device or the target object rejecting the first recommendation information.

Optionally, in a case that the first information includes multiple pieces of first recommendation information, the first feedback information further includes identification information of the first recommendation information.

Optionally, the first sending module 702 is further configured to: in a case that the first feedback information includes the seventh indication information, and the seventh indication information indicates that the second device or the target object rejects the first recommendation information, re-determine first recommendation information, and send the re-determined first recommendation information to the second device or the target object.

Optionally, the first sending module 702 is further configured to: in a case that the first feedback information includes the seventh indication information, and the seventh indication information indicates that the second device or the target object accepts the first recommendation information, send identification information of the first recommendation information included in the first feedback information to other target objects.

Optionally, the first recommendation information includes at least one of the following:
information indicating a recommended terminal device policy;
information indicating a recommended access control policy; and
information indicating a recommended session control policy.

Optionally, the target object includes at least one of the following: an access and mobility management function AMF, a session management function SMF, a user plane function UPF, a policy control function entity PCF, a terminal UE, an application function AF, an access network RAN, and an operation administration and maintenance OAM.

Optionally, the second device includes a PCF.

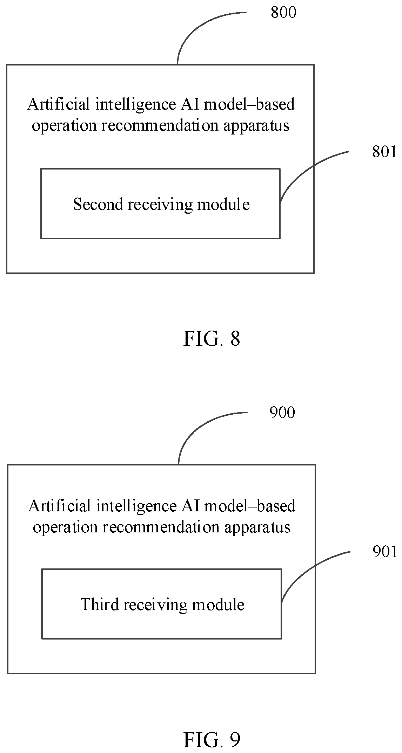

Referring to FIG. 8, an embodiment of this application further provides an AI model-based operation recommendation apparatus. As shown in FIG. 8, the AI model-based operation recommendation apparatus 800 includes:
a second receiving module 801, configured to receive first information from a first device or second information from a second device; where
the first information includes first recommendation information, the first recommendation information is determined based on an AI model and service objective information of a target service, the service objective information is used to indicate a service objective expected to be achieved, and the first recommendation information is used to determine an operation associated with the target service; and
the second information includes second recommendation information, and the second recommendation information is determined based on the first recommendation information.

Optionally, the AI model-based operation recommendation apparatus 800 further includes:
a second sending module, configured to: in a case that the target object receives first information from the first device, send first feedback information to the first device, where the first feedback information includes at least one of the following:
seventh indication information, where the seventh indication information is used to indicate whether the target object accepts the first recommendation information; and
reason information for the target object rejecting the first recommendation information.

Optionally, in a case that the first information includes multiple pieces of first recommendation information, the first feedback information further includes identification information of the first recommendation information.

Optionally, the second receiving module 801 is further configured to: in a case that the first feedback information includes the seventh indication information, and the seventh indication information indicates that the target object rejects the first recommendation information, receive re-determined first recommendation information from the first device.

Optionally, the AI model-based operation recommendation apparatus 800 further includes:
a second sending module, configured to send second feedback information to the second device; where
the second feedback information includes at least one of the following:
   eighth indication information, where the eighth indication information is used to indicate whether the target object accepts the second recommendation information; and
   reason information for the target object rejecting the second recommendation information.

Optionally, in a case that the second information includes multiple pieces of second recommendation information, the second feedback information further includes identification information of the second recommendation information.

Optionally, the second receiving module 801 is further configured to: in a case that the second feedback information includes the eighth indication information, and the eighth indication information indicates that the target object rejects the second recommendation information, receive re-determined second recommendation information from the second device.

Optionally, the AI model-based operation recommendation apparatus 800 further includes:
a second determining module, configured to determine whether to accept the target recommendation information, where the target recommendation information is the first recommendation information or the second recommendation information.

Optionally, the target recommendation information includes at least one of the following:
a recommended operation associated with the target service; and
a recommended value of a parameter associated with the target service.

Optionally, the AI model-based operation recommendation apparatus 800 further includes:
an execution module, configured to: in a case that the target object accepts the target recommendation information, determine a target operation based on the target recommendation information; and perform the target operation.

Optionally, the execution module is specifically configured to perform at least one of the following:
determining the target operation based on the recommended operation associated with the target service in the target recommendation information; and
determining the target operation based on the recommended value of the parameter associated with the target service in the target recommendation information.

Optionally, the target object includes at least one of the following: an access and mobility management function AMF, a session management function SMF, a user plane function UPF, a policy control function entity PCF, a terminal UE, an application function AF, an access network RAN, and an operation administration and maintenance OAM.

Referring to FIG. 9, an embodiment of this application further provides an AI model-based operation recommendation apparatus. As shown in FIG. 9, the AI model-based operation recommendation apparatus 900 includes:
a third receiving module 901, configured to receive first information from a first device; where
the first information includes first recommendation information, the first recommendation information is determined based on an AI model and service objective information of a target service, the service objective information is used to indicate a service objective expected to be achieved, and the first recommendation information is used to determine an operation associated with the target service.

Optionally, the AI model-based operation recommendation apparatus 900 further includes:
a first determining module, configured to determine second information based on the first information; and
a third sending module, configured to send the second information to a target object; where
the second information includes second recommendation information, the second recommendation information is determined based on the first recommendation information, and the target object is a device or a function for performing the operation.

Optionally, the first determining module is specifically configured to determine second recommendation information, where the second recommendation information includes at least one of the following: the first recommendation information, and recommendation information determined based on the first recommendation information; and generate the second information based on the second recommendation information.

Optionally, the third receiving module 901 is further configured to receive second feedback information from the target object; where
the second feedback information includes at least one of the following:
eighth indication information, where the eighth indication information is used to indicate whether the target object accepts the second recommendation information; and
reason information for the target object rejecting the second recommendation information.

Optionally, in a case that the second information includes multiple pieces of second recommendation information, the second feedback information further includes identification information of the second recommendation information.

Optionally, the AI model-based operation recommendation apparatus 900 further includes:
a first determining module, configured to determine first feedback information based on the second feedback information.

Optionally, the AI model-based operation recommendation apparatus 900 further includes:
a third sending module, configured to: in a case that the second feedback information includes the eighth indication information, and the eighth indication information indicates that the target object rejects the second recommendation information, re-determine second recommendation information; and send the re-determined second recommendation information to the target object.

Optionally, the first determining module is specifically configured to perform at least one of the following:
re-determining second recommendation information based on the first recommendation information; and
re-obtaining first recommendation information from the first device, and re-determining second recommendation information based on the re-obtained first recommendation information.

Optionally, the second recommendation information includes at least one of the following:
a recommended operation associated with the target service; and
a recommended value of a parameter associated with the target service.

Optionally, the second information includes at least one piece of the second recommendation information;
each piece of the second recommendation information includes at least one recommended operation corresponding to the target object or a recommended value of at least one parameter corresponding to the target object.

Optionally, in a case that the second information includes multiple pieces of second recommendation information, the second information further includes at least one of the following:
ninth indication information, where the ninth indication information is used to indicate a quantity of the second recommendation information; and
identification information of each piece of second recommendation information.

Optionally, the second information further includes at least one of the following:
a reason or purpose of recommendation;
prediction information of a service objective;
tenth indication information, where the tenth indication information is used to indicate whether alternative recommendation information is present in the second device, or is used to indicate whether the target object is allowed to request replacement of the second recommendation information;
eleventh indication information, where the eleventh indication information is used to indicate a type of the second recommendation information, and the type of the second recommendation information includes a recommended operation or a recommended value of a parameter; and
recommendation indication information, where the recommendation indication information is used to indicate that the second recommendation information is information for a recommendation purpose.

Optionally, the second recommendation information includes at least one of the following:
information indicating a recommended terminal device policy;
information indicating a recommended access control policy; and
information indicating a recommended session control policy.

Optionally, the AI model-based operation recommendation apparatus 900 further includes:
a third sending module, configured to send a request message to the first device, where the request message includes at least one of the following:
service objective information of the target service;
AI task type information;
service type information of the target service;
first indication information, where the first indication information is used to indicate a request to obtain recommendation information corresponding to the service objective information;
second indication information, where the second indication information is used to indicate a type of requested recommendation information, and the type of recommendation information includes a recommended operation or a recommended value of a parameter;
third indication information, where the third indication information is used to indicate a quantity of requested recommendation information;
information of the target object, where the information of the target object is used to indicate the target object;
network state information, used to indicate a current or future network state, where the network state information is used to obtain recommendation information corresponding to the network state; and
condition information associated with the first recommendation information.

Optionally, the AI model-based operation recommendation apparatus 900 further includes:
a third sending module, configured to send first feedback information to the first device, where the first feedback information includes at least one of the following:
seventh indication information, where the seventh indication information is used to indicate whether the target object or the second device accepts the first recommendation information; and
reason information for the target object or the second device rejecting the first recommendation information.

Optionally, in a case that the first information includes multiple pieces of first recommendation information, the first feedback information further includes identification information of the first recommendation information.

Optionally, the target object includes at least one of the following: an access and mobility management function AMF, a session management function SMF, a user plane function UPF, a policy control function entity PCF, a terminal UE, an application function AF, an access network RAN, and an operation administration and maintenance OAM.

The AI model-based operation recommendation apparatus in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The AI model-based operation recommendation apparatus provided in this embodiment of this application can implement all the processes implemented in the method embodiments in FIG. 2 to FIG. 6, with the same technical effects achieved. To avoid repetition, details are not described herein again.

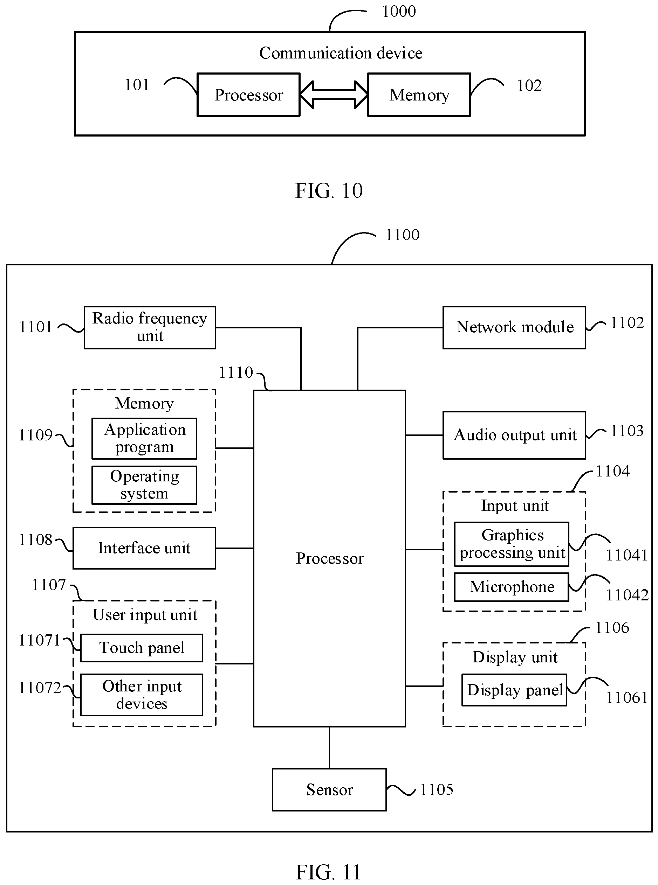

As shown in FIG. 10, an embodiment of this application further provides a communication device 1000, including a processor 1001 and a memory 1002, and the memory 1002 stores a program or instructions capable of running on the processor 1001. When the program or instructions are executed by the processor 1001, the steps of the foregoing embodiments of the AI model-based operation recommendation method may be implemented, with the same technical effects achieved. To avoid repetition, details are not described herein again.

An embodiment of this application further provides a terminal, which includes a processor and a communication interface, where the communication interface is coupled to the processor, and the processor is configured to run a program or instructions to implement the steps of the method embodiments shown in FIG. 5. The terminal embodiment corresponds to the foregoing terminal side method embodiment, and the implementation processes and implementations of the foregoing method embodiments can be applied to the terminal embodiments, with the same technical effects achieved. Specifically, FIG. 11 is a schematic diagram of a hardware structure of a terminal implementing an embodiment of this application.

The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The terminal structure shown in FIG. 11 does not constitute a limitation to the terminal. The terminal may include more or fewer components than those shown in the figure, or some components may be combined, or there may be a different component arrangement, which is not repeated herein.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061. The display panel 11061 may be configured in a form of a liquid crystal display, an organic light-emitting diode display, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1101 sends the downlink data to the processor 1110 for processing; and the radio frequency unit 1101 also sends uplink data to the network-side device. Generally, the radio frequency unit 1101 includes, but is not limited to, an antenna, an amplifier, a transceiver, a coupler, a low noise amplifier, a duplexer, and the like.

The memory 1109 may be configured to store software programs or instructions and various data. The memory 1109 may mainly include a first storage area for storing programs or instructions and a second storage area for storing data, where the first storage area may store an operating system, an application program or instructions required by at least one function (for example, an audio playing function and an image playing function), and the like. Further, the memory 1109 may include a volatile memory or a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1109 described in the embodiments of this application includes but is not limited to these and any other suitable types of memories.

The processor 1110 may include one or more processing units. Optionally, the processor 1110 may integrate an application processor and a modem processor. The application processor primarily processes operations involving an operating system, user interface, application program, or the like. The modem processor primarily processes radio communication signals, for example, being a baseband processor. It should be understood that alternatively, the modem processor may not be integrated into the processor 1110.

The radio frequency unit 1101 is configured to receive first information from a first device or second information from a second device; where
the first information includes first recommendation information, the first recommendation information is determined based on an AI model and service objective information of a target service, the service objective information is used to indicate a service objective expected to be achieved, and the first recommendation information is used to determine an operation associated with the target service; and
the second information includes second recommendation information, and the second recommendation information is determined based on the first recommendation information.

It can be understood that for the implementation processes of the implementations mentioned in this embodiment, reference may be made to the related descriptions of the method embodiments on the first device side, with the same or corresponding technical effects achieved. To avoid repetition, details are not described herein again.

An embodiment of this application further provides a network-side device, which includes a processor and a communication interface, where the communication interface is coupled to the processor, and the processor is configured to run a program or instructions to implement the steps of the method embodiments shown in FIG. 2, FIG. 5, or FIG. 6. The network-side device embodiment corresponds to the foregoing network-side device method embodiment, and the implementation processes and implementations of the foregoing method embodiments can be applied to the network-side device embodiment, with the same technical effects achieved.

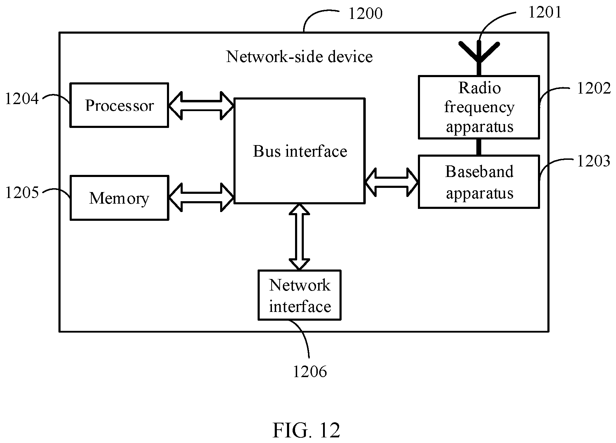

Specifically, an embodiment of this application further provides a network-side device. As shown in FIG. 12, the network-side device 1200 includes a processor 1204, a network interface 1206, and a memory 1205. The network interface 1206 is, for example, a common public radio interface (common public radio interface, CPRI).

Specifically, the network-side device 1200 in this embodiment of this application further includes: instructions or a program stored in the memory 1205 and capable of running on the processor 1204. The processor 1204 invokes the instructions or program in the memory 1205 to execute the method executed by the modules shown in FIG. 7, FIG. 8, or FIG. 9, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the AI model-based operation recommendation method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes of the foregoing embodiments of the AI model-based operation recommendation method, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product includes computer instructions, and the computer program/program product is executed by at least one processor to implement the processes of the foregoing embodiments of the AI model-based operation recommendation method, with the same technical effects achieved. To avoid repetition, details are not repeated herein.

An embodiment of this application further provides a wireless communication system, including a first device, a second device, and a target object, where the first device can be configured to perform the steps of the foregoing AI model-based operation recommendation method on the first device side, the second device can be configured to perform the steps of the foregoing AI model-based operation recommendation method on the second device side, and the target object can be configured to perform the steps of the foregoing AI model-based operation recommendation method on the target object side.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a ..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform. Specifically, the method in the foregoing embodiments may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. An artificial intelligence AI model-based operation recommendation method, comprising:
obtaining, by a first device based on an AI model and service objective information of a target service, first recommendation information corresponding to the service objective information, wherein the service objective information is used to indicate a service objective expected to be achieved, and the first recommendation information is used to determine an operation associated with the target service; and
sending, by the first device, first information to a target object or a second device, wherein the first information comprises the first recommendation information, and the target object is a device or a function for performing the operation.

2. The method according to claim 1, wherein the method further comprises:
receiving, by the first device, a request message from the second device, wherein the request message comprises at least one of the following:
service objective information of the target service;
AI task type information;
service type information of the target service;
first indication information, wherein the first indication information is used to indicate a request to obtain recommendation information corresponding to the service objective information;
second indication information, wherein the second indication information is used to indicate a type of requested recommendation information, and the type of recommendation information comprises a recommended operation or a recommended value of a parameter;
third indication information, wherein the third indication information is used to indicate a quantity of requested recommendation information;
information of the target object, wherein the information of the target object is used to indicate the target object;
network state information, used to indicate a current or future network state, wherein the network state information is used to obtain recommendation information corresponding to the network state; and
condition information associated with the first recommendation information.

3. The method according to claim 1 or 2, wherein in a case that the first device sends the first information to the second device, the first information is used to trigger the second device to send second information to the target object, the second information comprises second recommendation information, and the second recommendation information is determined based on the first recommendation information.

4. The method according to any one of claims 1 to 3, wherein the first information further comprises at least one of the following:
a reason or purpose of recommendation;
information about a target object corresponding to the first recommendation information;
prediction information of a service objective;
fourth indication information, wherein the fourth indication information is used to indicate whether alternative recommendation information is present in the first device, or is used to indicate whether the second device or the target object is allowed to request replacement of the first recommendation information;
fifth indication information, wherein the fifth indication information is used to indicate a type of the first recommendation information, and the type of the first recommendation information comprises a recommended operation or a recommended value of a parameter; and
recommendation indication information, wherein the recommendation indication information is used to indicate that the first recommendation information is information for a recommendation purpose.

5. The method according to any one of claims 1 to 4, wherein the first recommendation information comprises at least one of the following:
a recommended operation associated with the target service; and
a recommended value of a parameter associated with the target service.

6. The method according to any one of claims 1 to 5, wherein the first information comprises at least one piece of the first recommendation information; wherein
each piece of the first recommendation information comprises at least one recommended operation corresponding to the target object or a recommended value of at least one parameter corresponding to the target object.

7. The method according to any one of claims 1 to 6, wherein in a case that the first information comprises multiple pieces of the first recommendation information, the first information further comprises at least one of the following:
sixth indication information, wherein the sixth indication information is used to indicate a quantity of the first recommendation information; and
identification information of each piece of first recommendation information.

8. The method according to any one of claims 1 to 7, wherein the method further comprises:
receiving, by the first device, first feedback information from the second device or the target object, wherein the first feedback information comprises at least one of the following:
seventh indication information, wherein the seventh indication information is used to indicate whether the second device or the target object accepts the first recommendation information; and
reason information for the second device or the target object rejecting the first recommendation information.

9. The method according to claim 8, wherein in a case that the first information comprises multiple pieces of first recommendation information, the first feedback information further comprises identification information of the first recommendation information.

10. The method according to claim 8 or 9, wherein in a case that the first feedback information comprises the seventh indication information, and the seventh indication information indicates that the second device or the target object rejects the first recommendation information, the method further comprises:
re-determining, by the first device, first recommendation information, and sending the re-determined first recommendation information to the second device or the target object.

11. The method according to claim 8, wherein in a case that the first feedback information comprises the seventh indication information, and the seventh indication information indicates that the second device or the target object accepts the first recommendation information, the method further comprises:
sending, by the first device, identification information of the first recommendation information comprised in the first feedback information to other target objects.

12. The method according to any one of claims 1 to 11, wherein the first recommendation information comprises at least one of the following:
information indicating a recommended terminal device policy;
information indicating a recommended access control policy; and
information indicating a recommended session control policy.

13. An AI model-based operation recommendation method, comprising:
receiving, by a target object, first information from a first device or second information from a second device; wherein
the first information comprises first recommendation information, the first recommendation information is determined based on an AI model and service objective information of a target service, the service objective information is used to indicate a service objective expected to be achieved, and the first recommendation information is used to determine an operation associated with the target service; and
the second information comprises second recommendation information, the second recommendation information is determined based on the first recommendation information, and the target object is a device or a function for performing the operation.

14. The method according to claim 13, wherein in a case that the target object receives the first information from the first device, the method further comprises:
sending, by the target object, first feedback information to the first device, wherein the first feedback information comprises at least one of the following:
seventh indication information, wherein the seventh indication information is used to indicate whether the target object accepts the first recommendation information; and
reason information for the target object rejecting the first recommendation information.

15. The method according to claim 14, wherein in a case that the first information comprises multiple pieces of first recommendation information, the first feedback information further comprises identification information of the first recommendation information.

16. The method according to claim 14 or 15, wherein in a case that the first feedback information comprises the seventh indication information, and the seventh indication information indicates that the target object rejects the first recommendation information, the method further comprises:
receiving, by the target object, re-determined first recommendation information from the first device.

17. The method according to claim 13, wherein in a case that the target object receives the second information from the second device, the method further comprises:
sending, by the target object, second feedback information to the second device; wherein
the second feedback information comprises at least one of the following:
eighth indication information, wherein the eighth indication information is used to indicate whether the target object accepts the second recommendation information; and
reason information for the target object rejecting the second recommendation information.

18. The method according to claim 17, wherein in a case that the second information comprises multiple pieces of second recommendation information, the second feedback information further comprises identification information of the second recommendation information.

19. The method according to claim 17 or 18, wherein in a case that the second feedback information comprises the eighth indication information, and the eighth indication information indicates that the target object rejects the second recommendation information, the method further comprises:
receiving, by the target object, re-determined second recommendation information from the second device.

20. The method according to any one of claims 13 to 19, wherein the method further comprises:
determining, by the target object, whether to accept the target recommendation information, wherein the target recommendation information is the first recommendation information or the second recommendation information.

21. The method according to claim 20, wherein the target recommendation information comprises at least one of the following:
a recommended operation associated with the target service; and
a recommended value of a parameter associated with the target service.

22. The method according to claim 20 or 21, wherein in a case that the target object accepts the target recommendation information, the method further comprises:
determining, by the target object, a target operation based on the target recommendation information; and
performing, by the target object, the target operation.

23. The method according to claim 22, wherein the determining, by the target object, a target operation based on the target recommendation information comprises at least one of the following:
determining the target operation based on the recommended operation associated with the target service in the target recommendation information; and
determining the target operation based on the recommended value of the parameter associated with the target service in the target recommendation information.

24. An AI model-based operation recommendation method, comprising:
receiving, by a second device, first information from a first device; wherein
the first information comprises first recommendation information, the first recommendation information is determined based on an AI model and service objective information of a target service, the service objective information is used to indicate a service objective expected to be achieved, and the first recommendation information is used to determine an operation associated with the target service.

25. The method according to claim 24, wherein the method further comprises:
determining, by the second device, second information based on the first information; and
sending, by the second device, the second information to a target object; wherein
the second information comprises second recommendation information, the second recommendation information is determined based on the first recommendation information, and the target object is a device or a function for performing the operation.

26. The method according to claim 24, wherein the determining, by the second device, second information based on the first information comprises at least one of the following:
determining, by the second device, second recommendation information, wherein the second recommendation information comprises at least one of the following: the first recommendation information, and recommendation information determined based on the first recommendation information; and
generating, by the second device, the second information based on the second recommendation information.

27. The method according to claim 25 or 26, wherein the method further comprises:
receiving, by the second device, second feedback information from the target object; wherein
the second feedback information comprises at least one of the following:
eighth indication information, wherein the eighth indication information is used to indicate whether the target object accepts the second recommendation information; and
reason information for the target object rejecting the second recommendation information.

28. The method according to claim 27, wherein in a case that the second information comprises multiple pieces of second recommendation information, the second feedback information further comprises identification information of the second recommendation information.

29. The method according to claim 27, wherein the method further comprises:
determining, by the second device, first feedback information based on the second feedback information.

30. The method according to claim 27, wherein in a case that the second feedback information comprises the eighth indication information, and the eighth indication information indicates that the target object rejects the second recommendation information, the method further comprises:
re-determining, by the second device, second recommendation information; and
sending, by the second device, the re-determined second recommendation information to the target object.

31. The method according to claim 30, wherein the re-determining, by the second device, second recommendation information comprises at least one of the following:
re-determining, by the second device, second recommendation information based on the first recommendation information; and
re-obtaining, by the second device, first recommendation information from the first device, and re-determining second recommendation information based on the re-obtained first recommendation information.

32. The method according to any one of claims 25 to 31, wherein the second recommendation information comprises at least one of the following:
a recommended operation associated with the target service; and
a recommended value of a parameter associated with the target service.

33. The method according to any one of claims 25 to 32, wherein the second information comprises at least one piece of the second recommendation information; wherein
each piece of the second recommendation information comprises at least one recommended operation corresponding to the target object or a recommended value of at least one parameter corresponding to the target object.

34. The method according to any one of claims 25 to 33, wherein in a case that the second information comprises multiple pieces of second recommendation information, the second information further comprises at least one of the following:
ninth indication information, wherein the ninth indication information is used to indicate a quantity of the second recommendation information; and
identification information of each piece of second recommendation information.

35. The method according to any one of claims 25 to 34, wherein the second information further comprises at least one of the following:
a reason or purpose of recommendation;
prediction information of a service objective;
tenth indication information, wherein the tenth indication information is used to indicate whether alternative recommendation information is present in the second device, or is used to indicate whether the target object is allowed to request replacement of the second recommendation information;
eleventh indication information, wherein the eleventh indication information is used to indicate a type of the second recommendation information, and the type of the second recommendation information comprises a recommended operation or a recommended value of a parameter; and
recommendation indication information, wherein the recommendation indication information is used to indicate that the second recommendation information is information for a recommendation purpose.

36. The method according to any one of claims 25 to 35, wherein the second recommendation information comprises at least one of the following:
information indicating a recommended terminal device policy;
information indicating a recommended access control policy; and
information indicating a recommended session control policy.

37. The method according to any one of claims 24 to 36, wherein the method further comprises:
sending, by the second device, a request message to the first device, wherein the request message comprises at least one of the following:
service objective information of the target service;
AI task type information;
service type information of the target service;
first indication information, wherein the first indication information is used to indicate a request to obtain recommendation information corresponding to the service objective information;
second indication information, wherein the second indication information is used to indicate a type of requested recommendation information, and the type of recommendation information comprises a recommended operation or a recommended value of a parameter;
third indication information, wherein the third indication information is used to indicate a quantity of requested recommendation information;
information of the target object, wherein the information of the target object is used to indicate the target object;
network state information, used to indicate a current or future network state, wherein the network state information is used to obtain recommendation information corresponding to the network state; and
condition information associated with the first recommendation information.

38. The method according to any one of claims 24 to 37, wherein the method further comprises:
sending, by the second device, first feedback information to the first device, wherein the first feedback information comprises at least one of the following:
seventh indication information, wherein the seventh indication information is used to indicate whether the target object or the second device accepts the first recommendation information; and
reason information for the target object or the second device rejecting the first recommendation information.

39. The method according to claim 38, wherein in a case that the first information comprises multiple pieces of first recommendation information, the first feedback information further comprises identification information of the first recommendation information.

40. An AI model-based operation recommendation apparatus, comprising:
an obtaining module, configured to: based on an AI model and service objective information of a target service, obtain first recommendation information corresponding to the service objective information, wherein the service objective information is used to indicate a service objective expected to be achieved, and the first recommendation information is used to determine an operation associated with the target service; and
a first sending module, configured to send first information to a target object or a second device, wherein the first information comprises the first recommendation information, and the target object is a device or a function for performing the operation.

41. The apparatus according to claim 40, further comprising:
a first receiving module, configured to receive a request message from the second device, wherein the request message comprises at least one of the following:
service objective information of the target service;
AI task type information;
service type information of the target service;
first indication information, wherein the first indication information is used to indicate a request to obtain recommendation information corresponding to the service objective information;
second indication information, wherein the second indication information is used to indicate a type of requested recommendation information, and the type of recommendation information comprises a recommended operation or a recommended value of a parameter;
third indication information, wherein the third indication information is used to indicate a quantity of requested recommendation information;
information of the target object, wherein the information of the target object is used to indicate the target object;
network state information, used to indicate a current or future network state, wherein the network state information is used to obtain recommendation information corresponding to the network state; and
condition information associated with the first recommendation information.

42. An AI model-based operation recommendation apparatus, comprising:
a second receiving module, configured to receive first information from a first device or second information from a second device; wherein
the first information comprises first recommendation information, the first recommendation information is determined based on an AI model and service objective information of a target service, the service objective information is used to indicate a service objective expected to be achieved, and the first recommendation information is used to determine an operation associated with the target service; and
the second information comprises second recommendation information, and the second recommendation information is determined based on the first recommendation information.

43. An AI model-based operation recommendation apparatus, comprising:
a third receiving module, configured to receive first information from a first device; wherein
the first information comprises first recommendation information, the first recommendation information is determined based on an AI model and service objective information of a target service, the service objective information is used to indicate a service objective expected to be achieved, and the first recommendation information is used to determine an operation associated with the target service.

44. The apparatus according to claim 43, wherein the apparatus further comprises:
a first determining module, configured to determine second information based on the first information; and
a third sending module, configured to send the second information to a target object; wherein
the second information comprises second recommendation information, the second recommendation information is determined based on the first recommendation information, and the target object is a device or a function for performing the operation.

45. A terminal, comprising a processor and a memory, wherein the memory stores a program or instructions capable of running on the processor, and when the program or instructions are executed by the processor, steps of the AI model-based operation recommendation method according to any one of claims 13 to 23 are implemented.

46. A network-side device, comprising a processor and a memory, wherein the memory stores a program or instructions capable of running on the processor, and when the program or instructions are executed by the processor, steps of the AI model-based operation recommendation method according to any one of claims 1 to 39 are implemented.

47. A readable storage medium, wherein the readable storage medium stores a program or instructions, and when the program or instructions are executed by a processor, steps of the AI model-based operation recommendation method according to any one of claims 1 to 39 are implemented.

48. A computer program product, comprising computer instructions, wherein when the computer instructions are executed by a processor, steps of the AI model-based operation recommendation method according to any one of claims 1 to 39 are implemented.

49. A computer program product, wherein the computer program product is stored in a storage medium, and the computer program product is executed by at least one processor to implement the AI model-based operation recommendation method according to any one of claims 1 to 39.

50. A chip, wherein the chip comprises a processor and a communication interface, the communication interface is coupled to the processor, and the processor is configured to execute a program or instructions to implement the AI model-based operation recommendation method according to any one of claims 1 to 39.
